# DEMANDE DE BREVET EUROPEEN

(11) **EP 3 300 225 A1**
(43) Date de publication de la demande: **28.03.2018**
(21) Numéro de dépôt: 17188095.8
(22) Date de dépôt: 28.08.2017
(51) Int. Cl.: H02K 7/08, H02K 5/173, H02K 1/32, H02K 7/04, H02K 9/06, H02K 1/27, H02K 1/30

(54) **MOTEUR ELECTRIQUE A COURANT CONTINU SANS BALAIS POUR SYSTEME D'ESSUYAGE DE VEHICULE AUTOMOBILE**

(30) Priorité: 26.09.2016 FR 1659041
(71) Demandeur: Valeo Systèmes d'Essuyage, 78322 Le Mesnil Saint Denis (FR)
(72) Inventeur: HERRADA, Jose-Luis, 78322 LE MESNIL SAINT DENIS (FR)
(74) Mandataire: Valeo Systèmes d'Essuyage

(57) **Abrégé**

L'invention concerne un moto-réducteur (1) pour système d'essuyage de véhicule automobile comprenant :
- un moteur électrique (2) à courant continu sans balais comportant :
- un rotor (20) comprenant des éléments magnétiques (29),
- un stator (21) présentant des bobines d'excitation électromagnétique du rotor,
- un arbre de rotation (22) solidaire du rotor,

- un mécanisme réducteur (3) reliant l'arbre de rotation (22) et un arbre de sortie (8) du moto-réducteur.

Selon l'invention, un roulement (23) assure le guidage de l'arbre de rotation (22) à l'une des extrémités longitudinales de l'arbre de rotation, un support creux (25) porte lesdits éléments magnétiques (29) répartis sur sa périphérie et est agencé de manière coaxiale et solidaire en rotation de l'arbre de rotation (22), ledit support creux (25) venant coiffer le roulement (23) et dans lequel le support creux présente au moins une série d'alésages, répartis autour de l'axe de rotation dudit support creux.

## Description

La présente invention concerne un moto-réducteur pour système d'essuyage de véhicule automobile, ainsi qu'un système d'essuyage comprenant un tel moto-réducteur.

Les moto-réducteurs sont essentiellement composés d'un moteur électrique couplé à un mécanisme réducteur chargé d'en démultiplier la vitesse pour obtenir un couple de transmission en rotation important.

Différents types de moteurs électriques peuvent être utilisés dans un moto-réducteur et notamment les moteurs électriques à courant continu sans balai qui présentent de nombreux avantages comme une grande durée de vie, un encombrement et une consommation réduits ainsi qu'un faible niveau sonore.

Cependant, la commande des moteurs électriques est plus complexe par rapport aux moteurs électriques à balais car pour permettre un bon fonctionnement, il est nécessaire de connaître précisément la position angulaire du rotor du moteur électrique à courant continu sans balais (« Brushless » en anglais).

En effet, de tels moteurs électriques comprennent des bobines d'excitation électromagnétique disposées au niveau du stator et alimentées alternativement via un onduleur pour permettre l'entraînement du rotor.

Or, afin de pouvoir commuter les interrupteurs de l'onduleur (en général six commutations avec chaque tour du rotor) et donc l'alimentation des bobines électromagnétiques à des instants optimaux pour permettre d'obtenir l'entraînement désiré du rotor, il convient de connaître à chaque instant la position du rotor. A cet effet, la position du rotor et sa vitesse angulaire sont bien souvent déterminées par l'exploitation des signaux générés par un dispositif qui comprend un aimant multipolaire, monté tournant avec le rotor, et des capteurs à effet Hall agencés en des positions fixes par rapport à l'aimant.

Le document WO 2016/010023 divulgue un tel moto-réducteur pour système d'essuyage de véhicule automobile utilisant un moteur à courant continu sans balais. Le moteur sans balais comporte un stator présentant des bobines d'excitation électromagnétique du rotor, et le rotor est monté rigidement à l'extrémité d'un arbre de rotation. Cet arbre de rotation s'étend depuis une partie de carter pour l'ensemble rotor/stator et jusqu'à une partie du carter recevant le mécanisme de réduction qui est un engrenage à vis sans fin.

La vis de l'engrenage est solidaire de l'arbre de rotation du rotor et engrène avec la roue dentée solidaire de l'arbre de sortie du moto-réducteur.

De manière notable et comme visible à la figure 4 (ou à la figure 8) du document WO 2016/010023, on utilise seulement deux roulements à billes pour guider en rotation l'arbre de rotation du rotor, avec, d'une part, un premier roulement à billes, repéré 39 supportant une partie centrale de l'arbre de rotation, intermédiaire entre le rotor et la vis sans fin, et d'autre part, un deuxième roulement à l'extrémité longitudinale de l'arbre disposée de l'autre côté de la vis sans fin par rapport au premier roulement.

En particulier, la partie de longueur de l'arbre de rotation s'étendant depuis le premier roulement vers le rotor est guidée seulement par le premier roulement, l'extrémité longitudinale de l'arbre ressortant de l'autre côté du rotor étant libre de guidage.

Un tel guidage au moyen de deux roulements uniquement diffère de la pratique usuelle qui utilise classiquement un troisième roulement pour guider en rotation l'extrémité distale de l'arbre à proximité du rotor. Selon les constatations de l'inventeur, un tel guidage de l'arbre utilisant uniquement deux roulements permet de limiter l'encombrement du moto-réducteur suivant la direction de l'arbre. En revanche, l'omission du troisième roulement n'est pas idéale en termes d'efforts mécaniques, ce défaut pouvant être à l'origine de l'apparition de vibrations lors de la mise en rotation du rotor.

Plus encore, dans l'état de la technique connu, que le guidage de l'arbre soit à deux roulements ou à trois roulements comme précédemment cité, il est d'usage de toujours prévoir un roulement en une position intermédiaire sur la longueur de l'arbre de rotation, à proximité de la vis sans fin et un autre roulement sur l'extrémité longitudinale de l'arbre de l'autre côté de la vis sans fin. Un tel guidage par le positionnement de roulement au plus près de la vis sans fin permet de limiter le fléchissement de l'arbre de rotation au niveau de cette partie engrenante, et dans le but d'assurer un fonctionnement satisfaisant du mécanisme réducteur, sans risque de ripage de l'engrenage.

Dans le document WO 2016/010023, le roulement intermédiaire repéré 39 est disposé à proximité de l'aimant multipolaire du dispositif assurant la détermination de la position du rotor. Limiter le fléchissement de l'arbre, permet encore de maintenir dans des tolérances admises, l'écart radial entre l'aimant multipolaire et chaque capteur à effet Hall, de manière à assurer le bon fonctionnement du dispositif de capteur.

La présente invention a pour but de pallier les inconvénients précités en proposant un moto-réducteur pour système d'essuyage de véhicule automobile permettant d'obtenir une bonne compacité selon l'axe longitudinal de l'arbre de rotation, et sans sacrifier l'équilibrage dynamique du moteur électrique.

Un autre but de la présente invention est de proposer un tel moto-réducteur qui, au moins selon un mode de réalisation, présente de bonnes capacités de refroidissement.

D'autres buts et avantages de l'invention apparaitront au cours de la description qui va suivre qui n'est donnée qu'à titre indicatif et qui n'a pas pour but de la limiter.

Aussi l'invention est relative à un moto-réducteur pour système d'essuyage de véhicule automobile comprenant :
- un moteur électrique à courant continu sans balais comportant :
- un rotor comprenant des éléments magnétiques,
- un stator présentant des bobines d'excitation électromagnétique du rotor,
- un arbre de rotation solidaire du rotor,
- un mécanisme réducteur reliant l'arbre de rotation et un arbre de sortie du moto-réducteur,
et dans lequel un roulement assure le guidage de l'arbre de rotation à l'une des extrémités longitudinales de l'arbre de rotation, un support creux porte lesdits éléments magnétiques répartis sur sa périphérie et est agencé de manière coaxiale et solidaire en rotation de l'arbre de rotation, ledit support creux venant coiffer le roulement et dans lequel le support creux présente au moins une série d'alésages répartis autour de l'axe de rotation dudit support creux.

Selon des caractéristiques optionnelles de l'invention, pouvant être prises seules ou en combinaison :
- lesdits alésages sont traversants, en tout ou partie ;
- le support creux comprend un manchon assurant la fixation du support creux sur l'arbre de rotation, une section de longueur de support sensiblement cylindrique, sur la circonférence de laquelle sont solidarisés les éléments magnétiques du rotor, et une section de longueur de liaison reliant le manchon et ladite section de longueur (de support cylindrique ;
- une série desdits alésages est agencée dans la paroi de la section de longueur de liaison dudit support creux ;
- les alésages de la section de longueur de liaison sont traversants, agencés latéralement en regard dudit roulement ;
- ledit support creux comprend un épaulement s'étendant radialement vers l'extérieur à l'extrémité distale de ladite section de longueur de support des éléments magnétiques ;
- une série des alésages est agencée dans ledit épaulement ;
- ledit support creux est constitué par un élément d'un seul tenant ;
- ledit support creux est une tôle formée ;
- ledit support creux s'étend axialement au-delà de l'extrémité longitudinale de l'arbre de rotation , coté moteur électrique ;
- une ou plusieurs masselottes sont fixées dans certains des alésages, agencées pour assurer l'équilibrage dynamique des éléments tournants ;
- lesdits alésages sont traversants, la ou chaque masselote se présentant sous la forme d'un rivet fixé dans un des alésages traversant ;
- un carter formant une enveloppe de protection pour le moteur électrique et ledit mécanisme réducteur, ladite enveloppe du carter comprend une partie saillante vers l'intérieur, pénétrant ledit évidement interne au rotor, et formant un siège pour ledit roulement, et dans lequel ledit support creux vient coiffer ladite partie saillante du carter ;
- le guidage en rotation de l'arbre de rotation est assuré uniquement par deux roulements agencés aux deux extrémités longitudinales de l'arbre de rotation, y compris ledit roulement coiffé par ledit support creux, et un autre roulement à l'autre extrémité longitudinale de l'arbre de rotation, côté mécanisme réducteur.

L'invention concerne encore un système d'essuyage de véhicule automobile comprenant un ou plusieurs balais d'essuyage, un mécanisme d'embiellage pour l'entrainement du ou des balais d'essuyage selon un mouvement de va-et-vient, ainsi qu'un moto-réducteur selon l'invention dont l'arbre de sortie entraine le mécanisme d'embiellage.

L'invention sera mieux comprise à la lecture de la description suivante accompagnée des figures en annexe parmi lesquelles :

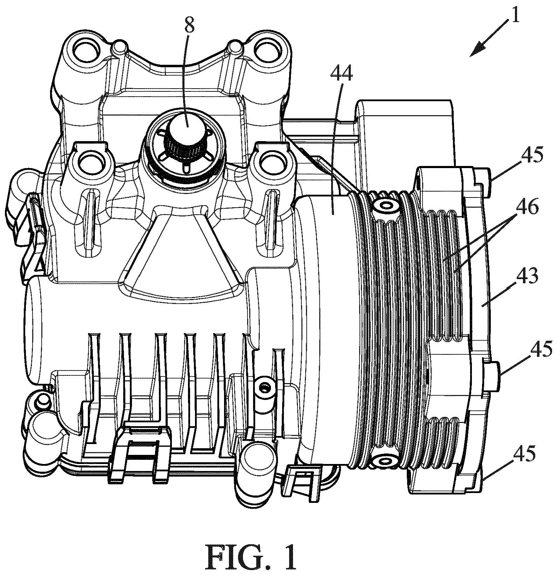

- La figure 1 est une vue en perspective d'un moto-réducteur conforme à l'invention selon un mode de réalisation,
- La figure 2 est une vue de coupe selon un plan passant par l'axe de l'arbre de rotation du rotor du moteur électrique du moto-réducteur de la figure 1,
- La figure 3 est une vue partielle du moto-réducteur de la figure 2 illustrant en détail l'arbre de rotation, ledit support creux solidaire de l'arbre, ainsi que les éléments magnétiques portés par ledit support creux,

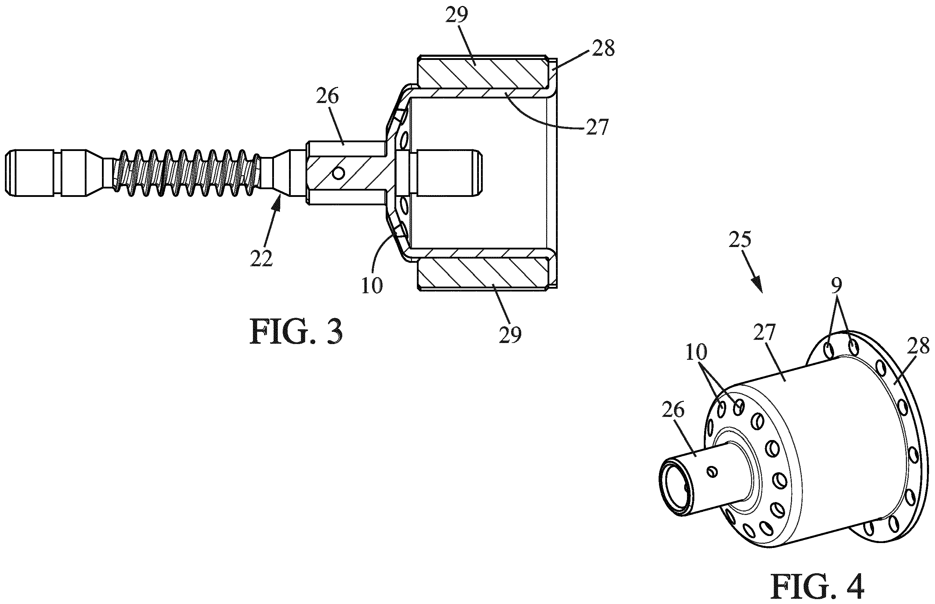

- La figure 4 est une vue de détail du support creux de la figure 3, présentant une première série d'alésages répartis angulairement autour de l'axe de rotation dudit support, les alésages étant pratiqués dans la paroi de la section de longueur de liaison reliant, d'une part, le manchon de fixation à l'arbre, et d'autre part, la section de longueur de support de plus grand diamètre, sensiblement cylindrique, une deuxième série d'alésages répartis angulairement autour de l'axe, les alésages étant pratiqués dans la paroi d'épaulement s'étendant radialement à l'extrémité distale de la section de longueur de support.

Aussi l'invention concerne un moto-réducteur 1 pour système d'essuyage de véhicule automobile comprenant un moteur électrique 2 et un mécanisme réducteur 3.

Le moteur électrique 2 est un moteur électrique à courant continu sans balais. Il comporte un rotor 20 présentant des éléments magnétiques 29, tels que des aimants permanents, répartis autour de l'axe du rotor, typiquement de polarités alternées, ainsi qu'un stator 21 présentant des bobines d'excitation du rotor. Le couple moteur du rotor est transmis à un arbre de rotation 22 qui est solidaire en rotation.

Le mécanisme réducteur 3 relie l'arbre de rotation 22 et un arbre de sortie 8 du moto-réducteur. Selon un mode de réalisation, le mécanisme réducteur 3 peut comprendre un système vis sans fin 30 /roue dentée 31, la vis sans fin solidaire de l'arbre de rotation 22 du rotor 20, la roue dentée 31 solidaire de l'arbre de sortie 8 du moto-réducteur. Cet arbre de sortie 8 est sensiblement perpendiculaire à l'arbre de rotation 22 du moteur électrique 2. Le filet de la vis sans fin 30 peut être obtenu à partir de la matière venant de l'arbre de rotation 22, typiquement en métal.

Un tel moto-réducteur comprend un dispositif de détermination de la position angulaire du rotor 20 par rapport au stator 21. Une unité de commande (non illustrée) est configurée pour générer des signaux de commande pour alimenter les bobines d'excitation électromagnétique du stator 21 en fonction de la position angulaire du rotor déterminée par le dispositif de détermination de la position angulaire du rotor.

Selon un mode de réalisation, le dispositif de détermination de la position angulaire du rotor peut comprendre un aimant multipolaire 5 solidaire en rotation du rotor, et un ou plusieurs capteurs à effet Hall (non illustrés) en des positions fixes, aptes à détecter les changements de domaines magnétiques de l'aimant multipolaire lors de la rotation du rotor.

L'arbre de rotation 22 est guidé en rotation, typiquement au moyen des roulements 23, 24. Un roulement 23 assure le guidage de l'arbre de rotation 22 à l'une des extrémités longitudinales de l'arbre de rotation, côté moteur électrique. De manière notable, ce roulement 23, est disposé interne à l'ensemble rotor 20 et stator 21, logé dans un évidement interne au rotor 20. Cette extrémité de l'arbre de rotation peut ainsi être avantageusement guidée par le roulement 23, sans nécessiter une longueur d'arbre telle que son extrémité ressorte au-delà du rotor, et selon l'état de la technique connu de la Demanderesse. D'autre part, le montage de ce roulement 23 interne au rotor, ne nécessite pas de disposer d'une portée sur la section de longueur utile de l'arbre de rotation extérieur au rotor, et qui est déjà utilisée pour supporter la vis sans fin et/ou pour supporter l'aimant polaire 5 : cette section de longueur de l'arbre externe au rotor peut être réduite au minimum, et dans l'objectif d'augmenter la compacité du moto-réducteur suivant cette direction.

A cet effet, le moto-réducteur comporte un support creux 25 qui porte lesdits éléments magnétiques 29 répartis sur sa périphérie et est agencé de manière coaxiale à l'arbre de rotation. Ce support creux et solidaire en rotation de l'arbre de rotation 22 vient avantageusement coiffer le roulement 23.

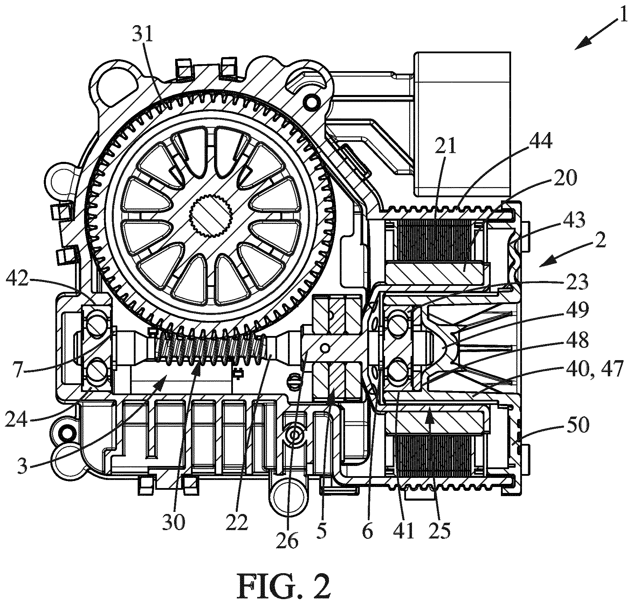

Comme illustré à la figure 2, on remarque que le support creux 25 est fixé à l'arbre de rotation, à l'une seulement de ses extrémités axiales, dite extrémité proximale. Cette extrémité proximale du support creux 25 est notamment constituée par un manchon de fixation 26. Ce support creux 25 s'étend axialement en porte à faux à partir de cette extrémité proximale afin de coiffer le roulement 23. Ce support creux 25 peut ainsi encore s'étendre axialement au-delà de l'extrémité longitudinale de l'arbre de rotation 22, coté moteur électrique. Il est ainsi possible de disposer lesdits éléments magnétiques 29 du rotor au moins partiellement au-delà de l'extrémité longitudinale de l'arbre de rotation 22, et comme illustré à titre d'exemple à la figure 2. Ce support creux est par exemple un corps de révolution qui comprend une partie creuse, tubulaire, de diamètre interne permettant d'y loger intérieurement le roulement 23, voire une partie saillante 40 du carter dont la fonction est décrite par la suite.

Le manchon 26 permet la fixation du support creux 25 sur l'arbre de rotation 22. Ce manchon 26 vient se fixer dans une position sur l'arbre de rotation 22 intermédiaire entre le mécanisme réducteur 3 et le roulement 23. Le diamètre intérieur du manchon 26 peut être ajusté au diamètre externe de l'arbre de rotation en cette position intermédiaire. Il peut s'agir d'un ajustement serré permettant un assemblage par frettage entre le support creux 25 et ledit arbre de rotation 22. Ce manchon 26 peut encore être fixé à l'arbre de rotation 22 par collage.

On remarque que l'aimant multipolaire 5 peut prendre la forme d'une bague montée autour de l'arbre de rotation. Les domaines magnétiques (nord/sud) s'étendent en alternance suivant la circonférence de la bague. Cet aimant multipolaire 5 peut être solidaire dudit support creux 25, agencé autour dudit manchon 26 de fixation dudit support creux 25.

Ledit support creux 25 comprend une section de longueur 27 de support des éléments magnétiques 29. Cette section 27 de longueur de support est sensiblement cylindrique. Les éléments magnétiques 29 du rotor sont solidarisés sur la paroi externe du cylindre. Un épaulement 28, en particulier sous forme d'une couronne, peut s'étendre radialement vers l'extérieur à l'extrémité distale de ladite section 27 de longueur de support des éléments magnétiques. Cet épaulement 28 forme une butée latérale pour lesdits éléments magnétiques 29 du rotor 20. Cet épaulement 28 facilite l'alignement des éléments magnétiques suivant une même ligne diamétrale.

On remarque encore que le support creux 25 présente une section de longueur de liaison reliant le manchon 26 et ladite section de longueur 27 de support, cylindrique, de plus grand diamètre que le manchon 26.

Le support creux 25 peut être constitué essentiellement par un élément d'un seul tenant, en particulier une tôle formée pour constituer consécutivement, le manchon 26, la section de liaison, la section 27 de support cylindrique, voire ledit épaulement 28.

Selon les constatations de l'inventeur, un tel support creux 25 recouvrant le roulement 23 permet avantageusement d'augmenter la compacité du moto-réducteur suivant la direction axiale de l'arbre.

En revanche, et comme compréhensible de la vue de coupe à la figure 2, le support creux 25 constitue un obstacle interne limitant la bonne circulation de l'air à l'intérieur du carter du moto-réducteur. Par ailleurs le montage en porte à faux axial du support creux peut altérer l'équilibrage dynamique des éléments tournants, à savoir de l'ensemble rotor-arbre de rotation et support creux.

Afin de pallier à tout ou partie de ces deux problèmes, le support creux présente au moins une série d'alésages, répartis autour de l'axe de rotation dudit support creux.

Ces alésages 9, 10 lorsque traversants permettent de favoriser la circulation d'air dans le carter du moteur. Par exemple et selon un mode de réalisation une série desdits alésages 10 peut être agencée dans la paroi de la section de longueur de liaison dudit support creux. Ces alésages 10 lorsque traversants constituent des évents autorisant une circulation de l'intérieur du support creux, vers l'extérieur, et inversement. On permet ainsi le refroidissement du roulement 23 coiffé par le support creux 25. Ces alésages 10 peuvent être agencés latéralement en regard du roulement 23 afin de favoriser le refroidissement de ce roulement 23.

Ces alésages 9, 10 peuvent encore être utilisés pour l'équilibrage dynamique des éléments tournants, et en particulier de l'ensemble rotor/support creux. Les alésages (traversant ou non) peuvent constituer des points d'ancrage pour une ou plusieurs masselottes, fixées dans certains des alésages, agencées pour assurer l'équilibrage dynamique des éléments tournants.

On équilibre dynamiquement l'ensemble des éléments tournants en fixant dans le ou les alésages les plus adapté(s) au réglage la ou les masselottes (non illustrées). Lorsque les alésages 9 ou 10 sont traversants, la ou chaque masselote peut se présenter sous la forme d'un rivet fixé dans un des alésages traversant.

Les alésages de la ou de chaque série d'alésage 9 ; 10 peuvent être répartis autour de l'axe de rotation dudit support creux 25, agencés sur un même diamètre, et de préférence régulièrement répartis. Les alésages 9 ou 10 consécutifs d'une même série d'alésage peuvent être répartis d'un angle constant, compris entre 20° et 40°, par exemple 30°. Par exemple, et pour un écart de 30° on dispose de 12 alésages répartis sur un même diamètre, décalés tous les 30° autour de l'axe de rotation dudit support creux 25, ce qui offre un nombre de positions discrètes de montage satisfaisant pour le réglage de position des masselottes.

On remarque encore qu'une série d'alésage peut être formée dans la paroi de la couronne formant l'épaulement 28, à l'extrémité distale dudit support creux 25. Ces alésages 9 peuvent être traversants ou non. Les positions de ces alésages 9 sont remarquables en ce qu'ils sont situés sur la partie de plus grand diamètre dudit support creux 25, ce qui amplifie l'effet de correction des masselottes, et par comparaison à un montage de la même masselotte sur une position de plus petit diamètre dudit support creux 25.

L'enveloppe du carter peut comprendre ladite partie saillante 40 dirigée vers l'intérieur du carter. Comme illustré à la figure 2, cette partie saillante 40 pénètre ledit évidement interne aux éléments magnétiques 29 du rotor 3, et supporte un siège 41 pour ledit roulement 23. Cette partie saillante 40 est coiffée par le support creux 25, au moins par ladite section 27 de longueur de support cylindrique, voire le cas échéant par ledit épaulement 28. La partie saillante 40 peut comprendre une paroi tubulaire 47, s'étendant coaxialement à l'arbre de rotation 22, le siège 41 pour le roulement étant formé à l'extrémité distale de la partie saillante 40 par un logement pour le roulement 23.

Ce logement peut être défini par la surface cylindrique interne de la paroi tubulaire 47, et un épaulement 48 s'étendant radialement vers l'intérieur à partir de la surface cylindrique 47. Le roulement 23 comprend une bague extérieure, une bague intérieure, et des éléments roulants, telles que des billes, le siège 41 du carter peut être de diamètre ajusté à la bague extérieure du roulement 23. On remarque encore que la paroi formant un épaulement 48 peut se prolonger pour obturer totalement le creux de la partie saillante, le cas échéant en formant une cavité 49 en sur-profondeur du logement pour le roulement 23 : cette cavité 49 en sur-profondeur du logement est destinée à recevoir une partie de l'extrémité de l'arbre de rotation, ressortant légèrement du roulement 23. Un anneau élastique 6, reçu dans une gorge de l'arbre de rotation 22, peut permettre de bloquer la position du roulement 23 dans le siège 41 correspondant du carter.

Selon un mode de réalisation, le carter peut comprendre, d'une part, une partie 44 d'enveloppe, en particulier cylindrique, recevant au moins le rotor 20 et le stator 21 du moteur électrique 2, présentant une ouverture latérale au moteur électrique 2, et d'autre part, un flasque de fermeture 43 assurant la fermeture de manière amovible de ladite ouverture latérale. Selon un mode de réalisation, ladite partie saillante 40 du carter peut être portée par le flasque de fermeture 43. La partie d'enveloppe 44 peut être un socle, notamment en métal, présentant des ailettes 46 destinées à faciliter l'évacuation de la chaleur.

Lorsque le flasque de fermeture 43 est retiré, l'ouverture latérale autorise le retrait des composants du moteur électrique, tels que le rotor 20, le stator 21, l'arbre de rotation 22, le support creux 25 notamment. Ce flasque de fermeture 43 peut comprendre une paroi en forme de disque 50 s'étendant latéralement à l'ensemble stator et rotor, et présentant un rebord périphérique venant coopérer de manière étanche avec un bord complémentaire de ladite ouverture latérale. Ladite partie saillante 40 s'étend à partir de cette paroi en forme de disque vers l'intérieur de l'évidement interne. Cette paroi en forme de disque et la partie saillante 40 du flasque de fermeture 43 peuvent être constituées par un élément d'un seul tenant, notamment métallique.

Le maintien du flasque de fermeture 43 contre la partie 44 peut être obtenu par l'intermédiaire d'organes de fixation 45 traversant des oreilles du flasque de fermeture 43, typiquement vissé dans des alésages taraudés de la partie d'enveloppe 44.

Selon un mode de réalisation, le guidage en rotation de l'arbre de rotation 22 est assuré uniquement par deux roulements 23, 24 agencés aux deux extrémités longitudinales de l'arbre de rotation 22, à savoir, d'une part, ledit roulement 23, du côté du moteur électrique, coiffé par le support creux 25, voire porté par le siège 41 de la partie saillante 40, et d'autre part, un autre roulement 24 à l'autre extrémité longitudinale de l'arbre de rotation 22, côté mécanisme réducteur 3.

Chaque roulement 23 ou 24 comprend une bague extérieure, une bague intérieure, et des éléments roulants, telles que des billes. Pour chaque extrémité longitudinale de l'arbre de rotation, la bague intérieure du roulement 23 (ou 24) correspondant peut être de diamètre interne ajusté au diamètre externe de l'arbre au niveau de l'extrémité longitudinale correspondante.

Un second siège 42, de diamètre ajusté à la bague extérieure reçoit le roulement 24 assurant le guidage de l'autre extrémité longitudinale de l'arbre de rotation 22, coté mécanisme réducteur 3. Le blocage de la position axiale de l'un et/ou l'autre des deux roulements 23, 24 sur l'arbre de rotation 22 peut être assuré grâce à un anneau élastique 6, 7 reçu dans une gorge de l'arbre de rotation 22.

L'anneau élastique 6, dit premier anneau élastique, est reçu dans une première gorge de l'arbre de rotation 22. Il permet de bloquer la position du roulement 23 dans le siège 41 correspond du carter. Un second anneau élastique 7 reçu dans une gorge de l'arbre de rotation 22 bloque la position axiale de l'autre roulement 24 dans l'autre siège 42 du carter. Les deux anneaux élastiques 6 et 7 peuvent respectivement engager en butée avec les deux roulements 23 et 24, coté intérieur, afin d'interdire leur rapprochement sur l'arbre de rotation 22.

On remarque que le diamètre de l'arbre de rotation 22 au niveau des extrémités longitudinales supportées par les deux roulements 23, 24 peut être supérieur au diamètre de l'arbre au niveau de la vis sans fin 30. Il est ainsi possible d'augmenter la résistance à la flexion de l'arbre de rotation 22, par une augmentation moyenne du diamètre de l'arbre de rotation. On obtient toujours un fonctionnement satisfaisant du mécanisme réducteur, en particulier sans risque de ripage entre la vis 30 et la roue 31 de l'engrenage du mécanisme réducteur, et alors que le guidage de l'arbre de rotation est dépourvu de palier de guidage sur une portion centrale de l'arbre.

L'invention concerne encore un système d'essuyage de véhicule automobile comprenant un ou plusieurs balais d'essuyage, un mécanisme d'embiellage pour l'entrainement du ou des balais d'essuyage selon un mouvement de va-et-vient, ainsi qu'un moto-réducteur selon l'invention dont l'arbre de sortie 8 entraine le mécanisme d'embiellage.

Dans un tel système, le mouvement de rotation continu de l'arbre de sortie 8 est transformé par le mécanisme d'embiellage en un mouvement de va-et-vient du ou des balais d'essuyage.

### NOMENCLATURE

1. Moto-réducteur,
2. Moteur électrique,
20. Rotor,
21. Stator,
22. Arbre de rotation,
23, 24. Roulements,
25. Support creux,
26. Manchon de fixation (support creux 25),
27. Section de longueur de support des éléments magnétiques du rotor (support creux 25),
28. Epaulement (support creux 12),
29. Eléments magnétiques du rotor (i.e aimants permanent)
3. Mécanisme réducteur,
30. vis sans fin,
31. Roue dentée,
40. Partie saillante,
41. 42 Sièges (roulements),
43. Flasque de fermeture,
44. Partie d'enveloppe (Socle),
45. Organes de fixation,
46. Ailettes (socle),
47. Paroi tubulaire (partie saillante 40),
48. Epaulement,
49. Cavité en sur-profondeur,
50. Paroi en forme de disque
5. Aimant multipolaire,
6, 7. Anneaux élastiques,
8. Arbre de sortie (Mécanisme réducteur),
9, 10. Alésages (support creux)

## Revendications

1. Moto-réducteur (1) pour système d'essuyage de véhicule automobile comprenant :
- un moteur électrique (2) à courant continu sans balais comportant :
- un rotor (20) comprenant des éléments magnétiques (29),
- un stator (21) présentant des bobines d'excitation électromagnétique du rotor,
- un arbre de rotation (22) solidaire du rotor,
- un mécanisme réducteur (3) reliant l'arbre de rotation (22) et un arbre de sortie (8) du moto-réducteur,
dans lequel un roulement (23) assure le guidage de l'arbre de rotation (22) à l'une des extrémités longitudinales de l'arbre de rotation, un support creux (25) porte lesdits éléments magnétiques (29) répartis sur sa périphérie et est agencé de manière coaxiale et solidaire en rotation de l'arbre de rotation (22), ledit support creux (25) venant coiffer le roulement (23) et dans lequel le support creux présente au moins une série d'alésages (9, 10), répartis autour de l'axe de rotation dudit support creux.

2. Moto-réducteur selon la revendication 1, dans lequel lesdits alésages (9, 10) sont traversants, en tout ou partie.

3. Moto-réducteur selon la revendication 1 ou 2 dans lequel le support creux (25) comprend :
- un manchon (26) assurant la fixation du support creux sur l'arbre de rotation (22),
- une section de longueur (27) de support sensiblement cylindrique, sur la circonférence de laquelle sont solidarisés les éléments magnétiques (29) du rotor,
- une section de longueur de liaison reliant le manchon (26) et ladite section de longueur (27) de support cylindrique.

4. Moto-réducteur selon la revendication 3, dans lequel une série desdits alésages (10) est agencée dans la paroi de la section de longueur de liaison dudit support creux (25).

5. Moto-réducteur selon la revendication 4, dans lequel les alésages (10) de la section de longueur de liaison sont traversants, agencés latéralement en regard dudit roulement (23).

6. Moto-réducteur selon l'une des revendications 4 et 5, dans lequel ledit support creux (25) comprend un épaulement (28) s'étendant radialement vers l'extérieur à l'extrémité distale de ladite section (27) de longueur de support des éléments magnétiques (29).

7. Moto-réducteur selon la revendication 6, dans lequel une série des alésages (9) est agencée dans ledit épaulement (28).

8. Moto-réducteur selon l'une des revendications 1 à 7, dans lequel ledit support creux (25) est constitué par un élément d'un seul tenant.

9. Moto-réducteur selon la revendication 8, dans lequel ledit support creux est une tôle formée.

10. Moto-réducteur selon l'une des revendications 1 à 9, dans lequel ledit support creux (25) s'étend axialement au-delà de l'extrémité longitudinale de l'arbre de rotation (22), coté moteur électrique.

11. Moto-réducteur selon l'une des revendications 1 à 10, dans lequel une ou plusieurs masselottes sont fixées dans certains des alésages, agencées pour assurer l'équilibrage dynamique des éléments tournants.

12. Moto-réducteur selon la revendication 11, dans lequel lesdits alésages sont traversants, la ou chaque masselote se présentant sous la forme d'un rivet fixé dans un des alésages traversant.

13. Moto-réducteur selon l'une des revendications 1 à 12, dans lequel un carter formant une enveloppe de protection pour le moteur électrique (2) et ledit mécanisme réducteur (3), ladite enveloppe du carter comprend une partie saillante (40) vers l'intérieur, pénétrant ledit évidement interne au rotor (3), et formant un siège (41) pour ledit roulement (23), et dans lequel ledit support creux (25) vient coiffer ladite partie saillante (40) du carter.

14. Moto-réducteur selon l'une des revendications 1 à 13, dans lequel le guidage en rotation de l'arbre de rotation (22) est assuré uniquement par deux roulements (23, 24) agencés aux deux extrémités longitudinales de l'arbre de rotation (22), y compris ledit roulement (23) coiffé par ledit support creux (25), et un autre roulement (24) à l'autre extrémité longitudinale de l'arbre de rotation, côté mécanisme réducteur (3).

15. Système d'essuyage de véhicule automobile comprenant un ou plusieurs balais d'essuyage, un mécanisme d'embiellage pour l'entrainement du ou des balais d'essuyage selon un mouvement de va-et-vient, ainsi qu'un moto-réducteur selon l'une quelconque des revendications 1 à 14 dont l'arbre de sortie (8) entraine le mécanisme d'embiellage.
